Europäisches Patentamt

European Patent Office

Office européen des brevets

(19)

(11) Veröffentlichungsnummer: **0 189 557**
**B1**

(12) **EUROPÄISCHE PATENTSCHRIFT**

(45) Veröffentlichungstag der Patentschrift:
19.04.89

(51) Int. Cl.⁴: **G 01 N 27/56**

(21) Anmeldenummer: **85115343.7**

(22) Anmeldetag: **03.12.85**

(54) **Festelektrolyt-Tauchsonde.**

(30) Priorität: **19.12.84 DE 3446320**

(43) Veröffentlichungstag der Anmeldung:
**06.08.86 Patentblatt 86/32**

(45) Bekanntmachung des Hinweises auf die Patenterteilung:
**19.04.89 Patentblatt 89/16**

(84) Benannte Vertragsstaaten:
**BE FR IT SE**

(56) Entgegenhaltungen:
**EP-A-0 042 066**
**EP-A-0 148 492**
**DE-B-2 327 009**
**DE-U-7 907 878**

(73) Patentinhaber: **Ferrotron Elektronik GmbH,
Siemensstrasse 9-11, D-4030 Ratingen (DE)**

(72) Erfinder: **Mach, Johannes, Dr., Am Jungbornpark
218, D-4130 Moers 3 (DE)**

(74) Vertreter: **Patentanwälte Dipl.- Ing. Walter Kuborn
Dipl.- Phys. Dr. Peter Palgen, Mulvanystrasse 2,
D-4000 Düsseldorf (DE)**

**Beschreibung**

Die Erfindung bezieht sich auf eine Festelektrolyt-Tauchsonde der dem Oberbegriff des Anspruchs 1 entsprechenden Art.

Eine derartige Festelektrolyt-Tauchsonde ist aus der DE-PS-2 327 009 bekannt. Der Schutzmantel aus porösem feuerfestem Material erstreckt sich hierbei bis in den Bereich des Meßkopfes. Er besteht jedoch nicht vollständig aus porösem feuerfestem Material, sondern es schließt sich an den feuerfesten Abschnitt ein Papprohr an, welches das Trägerrohr ebenso umgibt wie der Schutzmantelabschnitt aus dem porösen feuerfesten Material. Die Gesamtlänge des Schutzmantels auf dem Trägerrohr soll nach einem Beispiel etwa 50 cm betragen, wobei die untersten 10 cm aus dem porösen feuerfesten Material bestehen. Jedenfalls liegt im Bereich des Schmelzenspiegels eine Pappeoberfläche vor, die in der heißen Schmelze verbrennt. Der Abbrand beträgt erfahrungsgemäß ca. 1 mm pro Sekunde, so daß bei den üblichen Wanddicken von 6 bis 8 mm mit Standzeiten von 6 bis 8 Sekunden gerechnet werden kann.

Durch den Abbrand tritt in der Nähe der Sonde ein starkes Kochen in der Schmelze auf. Hierdurch entsteht eine Spritzgefahr. Insbesondere hat sich aber ein ausgeprägter Rühreffekt gezeigt, durch den auf der Schmelzenoberfläche lagerndes Abdeckpulver und dergleichen in die Schmelze hineingezogen werden. Dies macht sich besonders bei kleineren, d.h. weniger tiefen Schmelzegefäßen, z. B. Verteilern beim Strangguß, bemerkbar und führt zu Verunreinigungen im Stahl.

Für reine Temperaturmeßlanzen ist es bekannt, den gesamten in die Schmelze eintauchenden Bereich der Lanze bis zu dem das Thermoelement tragenden Eintauchende mit einem Schutzmantel aus porösem feuerfestem Material zu umgeben. Dieser ausgedehnte Schutzmantel besitzt jedoch eine nicht unerhebliche Wärmekapazität und führt, da er kalt eingetaucht wird, im Bereich der Meßstelle zu Temperaturströmungen, die zu Fehlmessungen Anlaß sein können. Noch aus einem weiteren Grund ist diese von reinen Temperaturmessungen her bekannte Lösung nicht ohne weiteres auf Einrichtungen zur Bestimmung der Sauerstoffaktivität zu übertragen: Für eine möglichst präzise Messung ist nämlich eine gewisse Badbewegung im Bereich des Meßkopfes erwünscht, damit an diesen ständig neue Mengen der Schmelze herangeführt werden und der Messung ein Mittelwert aus einem größeren Bereich der Schmelze zugrundeliegt, nicht aber ein Wert aus einem lokalen Schmelzbereich, der durch zufällige Einflüsse und auch durch das Vorhandensein des Meßkopfes selbst in der einen oder anderen Richtung beeinflußt sein kann. Wenn die Tauchsonde in ihrem gesamten in die Schmelze eintauchenden Bereich von dem Schutzmantel aus porösem feuerfestem Material umgeben ist, findet die erwünschte Badbewegung nicht statt.

Der Erfindung liegt daher die Aufgabe zugrunde, eine Festelektrolyt-Tauchsonde der dem Oberbegriff des Anspruchs 1 entsprechenden Art so auszugestalten, daß kein Einziehen von Abdeckpulver und dergleichen an der Schmelzenoberfläche stattfindet, dennoch aber eine Badbewegung im Bereich des Meßkopfes gewährleistet ist.

Diese Aufgabe wird erfindungsgemäß durch die im Kennzeichen des Anspruchs 1 wiedergegebenen Merkmale gelöst.

Dadurch, daß der Schutzmantel in der Betriebsstellung der Sonde nach oben aus der Schmelze hervorsteht, ist das meist aus Pappe bestehende Trägerrohr in diesem Bereich abgedeckt und findet hier kein sonst durch das Verbrennen der Pappe bewirktes Kochen mit dem damit einhergehenden Einziehen von auf der Oberfläche der Schmelze lagernden unerwünschten Partikeln statt. Da die Tauchsonde jedoch gleichzeitig im Innern der Schmelze einen Abschnitt aufweist, in dem sie der Schmelze eine Oberfläche aus Pappe oder einem ähnlichen verbrauchbaren, insbesondere verbrennbaren, jedenfalls aber bei der Desintegration eine Badbewegung erzeugenden Material darbietet, ergibt sich hier eine Rührbewegung und Badbewegung, die für die Einbeziehung größerer Schnelzebereiche in die Aktivitätsmessung erwünscht ist.

Bei der ersten möglichen Ausführungsform der Erfindung nach Anspruch 2 ist der dem Meßkopf benachbarte Bereich des Trägerrohrs freigelassen. Der feuerfeste Schutzmantel fängt also erst weiter oben an.

Eine alternative Ausführungsform ist in Anspruch 3 wiedergegeben.

Der Abschnitt liegt hierbei nicht in unmittelbarer Nähe des Meßkopfes, was in bestimmten Fällen angestrebt wird, wenn die kohlenstoffhaltigen Verbrennungsprodukte der Pappe die Sauerstoffaktivitätsmessung beeinflussen könnten.

Prinzipiell würde es ausreichen, wenn in der Unterbrechung ein Zugang zu dem aus Pappe bestehenden Trägerrohr gegeben wäre. Zur Verbesserung der Standzeit und auch der Strömungsverhältnisse jedoch empfiehlt sich die Ausgestaltung nach Anspruch 4.

In der Zeichnung sind Ausführungsbeispiele der Erfindung schematisch dargestellt.

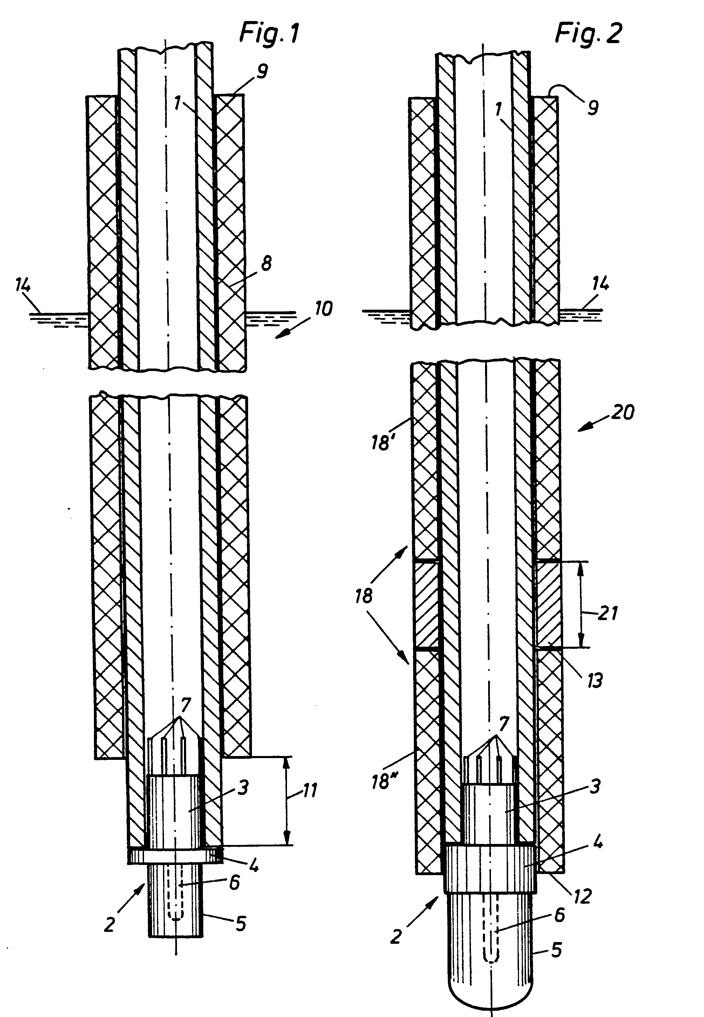

Fig. 1 und 2 zeigen Längsschnitte durch zwei Ausführungsformen.

Die in Fig. 1 als Ganzes mit 10 bezeichnete Festelektrolyt-Tauchsonde umfaßt ein Trägerrohr 1 aus einem Pappematerial von etwa 35 mm Durchmesser, 6 mm Wandstärke und 1,5 m Länge. An dem in Fig. 1 unten dargestellten Eintauchende sitzt der als Ganzes mit 2 bezeichnete Meßkopf, der einen zylindrischen Träger 3 aus keramischem Material umfaßt, der mit Preßsitz in das Ende des Trägers 1 eingedrückt ist und mit einem Radialflansch 4 gegen dessen Stirnseite von unten anliegt. Der Festelektrolyt hat die Gestalt eines die Vergleichssubstanz aufnehmenden Röhrchens 6 aus $ZrO_2$, welches gemäß Fig. 1 nach unten aus dem Träger 3 hervorsteht. Zum Schutz des Festelektrolytröhrchens 6 beim Eintauchen in die Schmelze und Hindurchführen durch die Schlackeschicht ist das Festelektrolytröhrchen 6 von einer Stahlkappe 5 abgedeckt, die in der Schmelze sofort wegschmilzt und den Festelektrolyten freigibt.

An dem in das Innere des Trägers 1 weisenden Ende des Trägers 3 sind die elektrischen Anschlüsse 7 vorgesehen, mittels deren der Meßkopf 2 beim Einschieben in den Träger 1 mit einem entsprechend ausgebildeten nicht dargestellten Kontaktstück verbindbar ist.

Der Träger 1 ist in dem in die Schmelze eintauchenden Bereich von einem Schutzmantel 8 umgeben, der aus einem porösen feuerfesten Material besteht. Beispielsweise kommen zur Bildung des Schutzmantels 8 gewickelte feuerfeste Fasern in Betracht, die mit einem Kunststoffbinder getränkt sind und nach dem Herstellen des Formkörpers getrocknet bzw. gebrannt werden. Der Schutzmantel 8 hat durch seine Feuerfestigkeit eine gewisse Standzeit und durch seine Porosität eine Wärmeisolierfähigkeit, die beim Eintauchen der Festelektrolyt-Tauchsonde 10 in die Schmelze das Trägerrohr 1 und die darin befindlichen elektrischen Anschlüsse und Leitungen davor bewahrt, zerstörerisch hohe Temperaturen schon während einer Messung anzunehmen.

Außerdem hat der Schutzmantel die Eigenschaft, daß er in betriebsfertigem, d. h. getrocknetem oder gebranntem Zustand, "tot" ist, d. h. in der Schmelze keinerlei Gase abgibt und nicht zu einem Kochen der Schmelze in seiner Umgebung und der entsprechenden Badbewegung Anlaß ist. Daraus ergibt sich auch gleichzeitig seine Spritzschutzfunktion, die das Bedienungspersonal vor herausgeschleuderten Metalltropfen schützt.

In dem Ausführungsbeispiel beträgt die Wandstärke des Schutzmantels 8 10 mm, seine Länge 300 mm. Die Länge wird so bemessen, daß das obere Ende 9 des Schutzmantels 8 in jedem Fall oberhalb des Schmelzenspiegels 14 gelegen ist, so daß in diesem Bereich die Schmelze keinen unmittelbaren Zugang zu dem Trägerrohr 1 finden kann. Der Schutzmantel 8 umgibt das Trägerrohr 1 ziemlich dicht, so daß kein nennenswertes Eindringen von Schmelze zwischen das Trägerrohr 1 und den Innenumfang des Schutzmantels 8 stattfinden kann.

Das Wesentliche an dem Ausführungsbeispiel der Fig. 1 besteht darin, daß das Trägerrohr 1 am Eintauchende in dem Bereich 11 von dem Schutzmantel 8 frei ist. Die Schmelze findet auf diese Weise in diesem Bereich unmittelbaren Zugang zu dem Trägerrohr 1, welches an dem Eintauchende verbrennt und eine gewünschte Badbewegung in der Schmelze im Bereich des Meßkopfes 2 erzeugt. Der Abschnitt 11 ist in dem Ausführungsbeispiel 30 mm lang und kann etwa im Bereich von 5 bis 50 mm gelegen sein.

Soweit bei der Festelektrolyt-Tauchsonde 20 der Fig. 2 entsprechende Teile vorhanden sind, tragen sie die gleichen Bezugszahlen wie die in Fig. 1.

Der Hauptunterschied besteht in der Ausbildung des Schutzmantels 18, dessen unteres Ende 12 das Eintauchende des Trägerrohrs 1 überdeckt und sogar noch einen Teil des Flansches 4 des Trägers 3 umgibt. Weiterhin weist der Schutzmantel 18 eine Unterbrechung auf und besteht somit aus einem das Eintauchende des Trägers 1 überdeckenden Teil 18'' und einem oberen Teil 18', dessen oberes Ende 9 oberhalb des Schmelzenspiegels gelegen ist. In einem Abschnitt 21 zwischen den Teilen 18' und 18'' ist kein Schutzmantel 18 vorhanden. Die Unterbrechung ist vielmehr durch einen Pappring 13 ausgefüllt, der in Achsrichtung dicht an die Teile 18',18'' anschließt und am Außenumfang mit diesen fluchtet. In dem Abschnitt 21 bietet somit die Festelektrolyt-Tauchsonde 20 der Schmelze die Oberfläche des Papprings 13 dar, so daß es hier zu einer Verbrennung des Pappematerials mit der entsprechenden Rührwirkung und Badbewegung kommt. Der Abschnitt 21 hat Abstand sowohl vom oberen Ende 9 als auch vom unteren Ende 12 des Schutzmantels 18.

Die Länge des Abschnitts 21 beträgt in dem Ausführungsbeispiel etwa 30 mm und kann im Bereich 20 bis 100 mm liegen. Die Länge des Teils 18'' des Schutzmantels beträgt 75 mm und kann im Bereich 40 bis 120 mm liegen. Die Länge des Teils 18' beträgt 300 mm und kann im Bereich von 200 bis 500 mm liegen.

Das obere Ende 9 des Schutzmantels 8, 18 befindet sich in jedem Fall mit einem sicheren Abstand oberhalb des Schmelzenspiegels 14 und auch oberhalb einer darauf etwa lagernden Schlackenschicht, der Abschnitt 11, 21 mit Abstand unterhalb des Schmelzenspiegels 14.

## Patentansprüche

1. Festelektrolyt-Tauchsonde (10, 20) zur Bestimmung der Sauerstoffaktivität von Metall-, insbesondere Stahlschmelzen, mit einem Trägerrohr (1) aus einem wärmeisolierenden verbrauchbaren Material, insbesondere dickwandiger Pappe, welches am Eintauchende den eigentlichen Meßkopf (2) trägt und im Bereich des Eintauchendes von einem Schutzmantel (8, 18) aus einem porösen feuerfesten Material dicht umgeben ist, dadurch gekennzeichnet, daß die Festelektrolyt-Tauchsonde (10, 20) bis über den Bereich, der beim Eintauchen in die Schmelze in Höhe des Schmelzenspiegels (14) gelegen ist, von dem Schutzmantel (8, 18) aus dem porösen feuerfesten Material umgeben ist und in einem Bereich, der beim Eintauchen in die Schmelze mit Abstand unterhalb des Schmelzenspiegels (14) gelegen ist, ein Abschnitt (11, 21) vorhanden ist, in welchem die Festelektrolyt-Tauchsonde (10,20) der Schmelze eine Oberfläche aus wärmeisolierendem verbrauchbarem Material, insbesondere Pappe, darbietet.

2. Festelektrolyt-Tauchsonde nach Anspruch 1, dadurch gekennzeichnet, daß der Abschnitt (11) durch den untersten, dem Meßkopf (2) benachbarten Bereich des Trägerrohrs (1) gegeben ist, der von dem Schutzmantel (8) frei ist.

3. Festelektrolyt-Tauchsonde nach Anspruch 2, dadurch gekennzeichnet, daß der Schutzmantel (18) bis zum Meßkopf (2) reicht und der Abschnitt (21) durch eine mit Abstand oberhalb des Meßkopfes (2) gelegene Unterbrechung des Schutzmantels (18) gegeben ist.

4. Festelektrolyt-Tauchsonde nach Anspruch 3, dadurch gekennzeichnet, daß in dem Abschnitt (21) das fehlende Stück des Schutzmantels (18) durch einen auf dem Trägerrohr (1) sitzenden, dicht an die Teile (18', 18") des Schutzmantels (18) anschließenden Pappering (13) ausgefüllt ist.

## Claims

1. Solid electrolyte immersion probe (10, 20) for determining the oxygen activity of metal melts, in particular steel melts, with a carrier tube (1) of a thermally insulating consumable material, in particular thick-walled cardboard, which carries at the distal end the actual measuring head (2) and is tightly enclosed in the region of the distal end in a protective shield (8, 18) of a porous refractory material, characterised in that the solid electrolyte immersion probe (10, 20) is enclosed in the protective shield (8, 18) of the porous refractory material to a point above the region which is present at the level of the surface (14) of the melt on immersion in the melt, and in the region which extends below the surface (14) of the melt on immersion in the melt a portion (11, 21) is provided in which the solid electrolyte immersion probe (10, 20) presents to the melt a surface of thermally insulating consumable material, in particular cardboard.

2. Solid electrolyte immersion probe according to claim 1 characterised in that the portion (11) is formed by the lowermost region of the carrier tube (1) adjacent the measuring head (2), which region is free of the protective shield (8).

3. Solid electrolyte immersion probe according to claim 2 characterised in that the protective shield (18) extends right to the measuring head (2) and the portion (21) is formed by a gap in the protective shield (18) spaced above the measuring head (2).

4. Solid electrolyte immersion probe according to claim 3 characterised in that, in the portion (21), the missing piece of the protective shield (18) is filled by a cardboard ring (13) seated on the carrier tube (1) and engaging tightly against the parts (18', 18) of the protective shield (18).

## Revendications

1. Sonde à immersion en électrolyte solide (10, 20) pour déterminer l'activité en oxygène d'un bain de métal fondu, notamment d'un bain d'acier, comportant un tube de support (1) en un matériau réfractaire consommable en particulier du carton à paroi épaisse, dont l'extrémité à immerger porte la tête de mesure (2) proprement dite et qui est entourée dans la zone de l'extrémité immergée par une gaine protectrice (8, 18) en un matériau réfractaire poreux, sonde caractérisée en ce qu'elle (10, 20) est entourée d'une enveloppe protectrice (6, 18) en un matériau réfractaire poreux jusque dans la zone se trouvant à la hauteur du niveau du bain (14) lors de l'immersion dans le bain, et dans la zone qui, lors de l'immersion dans le bain se trouve à une certaine distance en-dessous du niveau (14) du bain, il est prévu un segment (11, 21) dans lequel la sonde d'immersion en électrolyte solide (10, 20) présente vis-à-vis du bain une surface extérieure en un matériau réfractaire consommable notamment en carton.

2. Sonde à immersion en un électrolyte solide selon la revendication 1, caractérisée en ce que le segment (11) est défini par la zone du tube de support (1) voisine de la tête de mesure (2), zone qui ne comporte pas d'enveloppe protectrice (8).

3. Sonde à immersion en électrolyte solide selon la revendication 2, caractérisée en ce que l'enveloppe protectrice (18) arrive jusqu'à la tête de mesure (2) et le segment (21) est défini par une interruption de l'enveloppe protectrice (18) au-dessus de la tête de mesure (2).

4. Sonde à immersion en électrolyte solide selon la revendication 3, caractérisée en ce que la partie manquante de l'enveloppe protectrice (18) au niveau du segment (21) est remplie par un anneau en carton (13) prenant appui sur le tube de support (1) et directement adjacent en parties (18', 18") formant l'enveloppe protectrice (18).

*Fig.1*

*Fig.2*